# EUROPÄISCHE PATENTSCHRIFT

(11) **EP 3 337 420 B1**
(45) Veröffentlichungstag und Bekanntmachung des Hinweises auf die Patenterteilung: **03.07.2019**
(21) Anmeldenummer: 16741857.3
(22) Anmeldetag: 14.07.2016
(51) Int. Cl.: A61C 8/00, A61C 19/04

(54) **ANORDNUNG ZUR BESTIMMUNG EINER PASSENDEN ANGULATION EINES ABUTMENTS FÜR EIN ZAHNIMPLANTAT**
ARRANGEMENT FOR DETERMINING A SUITABLE ANGULATION OF AN ABUTMENT FOR A DENTAL IMPLANT
ENSEMBLE POUR DÉTERMINER UNE ANGULATION APPROPRIÉE DE BUTÉE POUR IMPLANT DENTAIRE

(30) Priorität: 19.08.2015 DE 102015113703
(43) Veröffentlichungstag der Anmeldung: 27.06.2018
(73) Patentinhaber: Dentsply Implants Manufacturing GmbH, 63457 Hanau (DE)
(72) Erfinder: BIEHL, Volker, 66539 Neunkirchen (DE); LANGE, Thomas, 63505 Langenselbold (DE); AFLENZER-WEISANG, Michael, 68229 Mannheim (DE)
(74) Vertreter: Wesch, Arno
(86) Internationale Anmeldenummer: PCT/EP2016/001228
(87) Internationale Veröffentlichungsnummer: WO 2017/028938

(56) Entgegenhaltungen:
- DE-U1- 29 817 955
- JP-B2- 3 637 978
- US-A- 4 932 868
- US-B1- 9 072 575

## Beschreibung

Die Erfindung betrifft eine Anordnung zur Auswahl eines abgewinkelten Abutments für ein Zahnimplantat aus einer Vielzahl von vorgegebenen Abutments mit unterschiedlichen Angulationen gemäß dem Oberbegriff von Anspruch 1.

Aus der US 4,932,868 A ist ein Implantat bekannt, welches einen schwenkbaren Verbinder umfasst.

Aus der DE 298 17 955 U1 ist eine Implantat-Winkelmeßvorrichtung mit einem Arm mit einer Meßskala bekannt, wobei der Arm an einem Träger vorgesehen ist. Die US 9 072 575 B1 zeigt eine weitere Winkelmeßvorrichtung zum Messen eines Winkelunterschieds und die JP 3 637978 B2 zeigt ein gewinkeltes Abutment.

Für die Implantation von künstlichen Zähnen in einen Kieferknochen werden zunehmend zweiteilige Zahnimplantate eingesetzt, die einen in den Kieferknochen einschraubbaren Implantatkörper sowie ein in den Implantatkörper einsetzbares und mit diesem verbindbares Abutment umfassen, an dem der allgemein als Suprakonstruktion bezeichnete Zahnersatz, bspw. eine Krone oder eine herausnehmbare Prothese, befestigt wird.

Um nach dem Einsetzen des Implantatkörpers in den Kieferknochen den Winkel zwischen der Längsachse des Implantatkörpers und der Längsachse des aus dem Implantatkörper herausstehenden Abutments so auszurichten, dass letztere im Wesentlichen in dieselbe Richtung weist, wie die Achse der benachbarten Zähne oder Zahnimplantate, ist es bekannt, Abutments mit unterschiedlichen Winkeln einzusetzen, die in Fachkreisen auch als Angulationen bezeichnet werden.

Da es für eine optimale Anpassung der Suprakonstruktionen ebenfalls erforderlich ist, bei der Auswahl eines geeigneten Abutments auch die Art des Abutments sowie die Höhe der Gingiva mit in Betracht zu ziehen, um später eine optimale Passgenauigkeit des Zahnersatzes zu erhalten, werden von den Herstellern in der Praxis für ein Zahnimplantat eine Vielzahl von möglichen Abutment-Variationen bereit gestellt, aus denen der Zahnarzt oder das Zahnlabor die am besten geeignete Variante auswählen muss, um am Ende einer Behandlung ein zufriedenstellendes Ergebnis zu erhalten.

So werden beispielsweise von der Anmelderin unter der Bezeichnung "Ankylos" Implantatsysteme vertrieben, bei denen insgesamt fünf unterschiedliche Arten von Abutments mit jeweils vier verschiedenen Gingiva-Höhen und zusammen sechs unterschiedlichen Angulationen für jede Abutment-Art und Gingiva-Höhe zum Einsatz gelangen. Daraus ergeben sich insgesamt ca. 120 unterschiedliche Varianten von Abutments, aus denen der Zahnarzt nach dem Einsetzen des Implantatkörpers die am besten geeignete Variante auswählen muss.

Um bei der Auswahl einer geeigneten Abutment Variante aus Kostengründen nicht eine entsprechende Anzahl von praktisch einsetzbaren realen Abutments vorhalten zu müssen, werden in der Praxis üblicher Weise Probepfosten verwendet, die z.B. aus Kunststoff gefertigt sind und in einem Aufbewahrungsbehälter mit z.B. 120 einzelnen Fächern, ähnlich einem Setzkasten, aufbewahrt werden. Hierbei bedarf es einer großen Erfahrung des Zahnarztes, die geeignete Variante aus der großen Zahl von Probepfosten gezielt auszuwählen. Ein weiteres Problem stellt es in diesem Zusammenhang ebenfalls dar, die Probepfosten im Aufbewahrungsbehälter steril zu halten, bzw. nach dem probeweisen Einsetzen in einen implantierten Implantatkörper wieder zu sterilisieren und steril in das entsprechende Fach des Aufbewahrungsbehälters einzubringen.

Demgemäß ist es eine Aufgabe der vorliegenden Erfindung, eine Vorrichtung zu schaffen, mit welcher sich die Angulation eines in ein implantiertes Zahnimplantat einzusetzenden Abutments mit geringem Aufwand bestimmen lässt.

Weiterhin ist es eine Aufgabe der vorliegenden Erfindung, eine Anordnung zu schaffen, mit der sich ein gewinkeltes Abutment mit geringem Aufwand und in kürzester Zeit aus einer Vielzahl von vorgegebenen Abutments für ein implantiertes Zahnimplantat auswählen lässt.

Diese Aufgabe wird erfindungsgemäß durch die Merkmale von Anspruch 1 gelöst.

Weitere Merkmale der Erfindung sind in den Unteransprüchen beschrieben. Gemäß der Erfindung umfasst eine Vorrichtung zur Bestimmung der Angulation eines Abutments, das in ein zuvor implantiertes Zahnimplantat einzusetzen ist, ein Gehäuse, an dessen Außenseite ein zapfenförmiger Vorsprung befestigt ist. Der zapfenförmige Vorsprung, der beispielsweise eine parallelwandige, konische oder hexagonale oder sonstige Form besitzt, wird in die Innenbohrung des nachfolgend als Zahnimplantat bezeichneten Implantatkörpers vorzugsweise mit geringem Spiel eingeführt. Die Vorrichtung umfasst weiterhin einen Drehkörper, der im Gehäuse relativ zum zapfenförmigen Vorsprung drehbar aufgenommen ist, sowie einen stabförmigen Anzeiger, der mit dem Drehkörper verbunden ist. Der stabförmige Anzeiger erstreckt sich hierbei vorzugsweise radial von der Mantelfläche des Drehkörpers weg, welcher bevorzugt als zylindrischer oder zylinderartiger Drehkörper ausgestaltet ist.

Die erfindungsgemäße Vorrichtung zeichnet sich dadurch aus, dass der Drehkörper durch eine zwischen dem Drehkörper und dem Gehäuse wirkende Arretiereinrichtung in unterschiedlichen Drehwinkelstellungen drehfest mit dem Gehäuse koppelbar ist.

Durch die Erfindung ergibt sich der Vorteil, dass der Zahnarzt nach dem Einstecken des zapfenförmigen Vorsprungs in die Innenbohrung des bereits implantierten Zahnimplantats den stabförmigen Anzeiger nach dem Lösen der Arretiereinrichtung von Hand in eine solche Position bewegen kann, in der die Längsachse des stabförmigen Anzeigers im Wesentlichen parallel zur Längsachse der angrenzenden Zähne und/oder angrenzenden Suprastrukturen und/oder einer zur Wiederherstellung der Kaufunktion anzustrebenden Ausrichtung einer späteren Versorgung, d.h. einer Prothese für einen zahnlosen Kiefer, ausgerichtet ist. Nach dem Ausrichten betätigt der Zahnarzt die Arretiereinrichtung, wodurch bewirkt wird, dass der stabförmige Anzeiger in der ausgewählten Drehwinkelstellung drehfest mit dem Gehäuse gekoppelt ist, sodass ein fester Winkel zwischen der Längsachse des zapfenförmigen Vorsprungs und der Längsachse des stabförmigen Anzeigerelements erhalten wird, der dem idealen Angulationswinkel des einzusetzenden Abutments entspricht.

Nach der Entnahme der Vorrichtung mit dem arretierten Drehwinkel zwischen stabförmigem Anzeiger und zapfenförmigem Vorsprung kann vom Zahnarzt dann anhand des Winkels ein entsprechendes, am besten geeignetes Abutment aus der Vielzahl von möglichen Abutments ausgewählt werden, welches dieser in den Implantatkörper einsetzt und bspw. in bekannter Weise durch Verschrauben oder Verkleben an diesem fixiert, um im Anschluss daran die Suprastruktur am Abutment zu befestigen.

Die Erfindung besitzt den Vorteil, dass durch die Kenntnis des optimalen Angulationswinkels die Anzahl an Vorrichtungs-Varianten, die vom Zahnarzt probeweise in einen implantierten Implantatkörper eingesetzt werden müssen, um ein geeignetes Abutment zu ermitteln, beachtlich verringert wird. Hierdurch reduziert sich die Tätigkeit des Zahnarztes in erster Linie darauf, zunächst den geeigneten Abutment-Typ und die passende Gingiva-Hohe zu ermitteln, was z.B. durch probeweises Einsetzen von unterschiedlich gestalteten erfindungsgemäßen Vorrichtungen erfolgt. Wenn eine Vorrichtung mit einer passenden Form und Gingiva-Höhe durch ein probeweises Einsetzen ermittelt wurde, wird im Anschluss daran die passende Angulation bestimmt.

Die Erfindung wird nachfolgend mit Bezug auf die Zeichnungen anhand von bevorzugten Ausführungsformen beschrieben.

In den Zeichnungen zeigen:
- Fig. 1a: eine schematische seitliche Querschnittsansicht der erfindungsgemäßen Vorrichtung in der Freigabeposition,
- Fig. 1b: eine schematische seitliche Querschnittsansicht der erfindungsgemäßen Vorrichtung in der Arretierposition,
- Fig. 2a: eine schematische Querschnittsansicht eines Kieferknochens mit implantiertem Zahnimplantat vor dem Einführen der erfindungsgemäßen Vorrichtung in die Innenbohrung des Zahnimplantats,
- Fig. 2b: die Querschnittsansicht von Fig. 2a nach dem Einführen des zapfenförmigen Vorsprungs in die Innenbohrung des Zahnimplantats,
- Fig. 2c: die Querschnittsansicht von Fig. 2b nach dem Verschwenken des stabförmigen Anzeigers in eine Richtung parallel zur Längsachse eines angrenzenden Zahns,
- Fig. 2d: die Querschnittsansicht von Fig. 2c während des Verdrehens des stabförmigen Anzeigers, um diesen gegenüber dem Gehäuse zu arretieren,
- Fig. 2e: die Querschnittsansicht von Fig. 2d nach dem Entnehmen der Vorrichtung mit arretiertem Anzeiger,
- Fig. 3: eine erfindungsgemäße Anordnung zur Auswahl eines gewinkelten Abutments, bei der die erfindungsgemäße Vorrichtung mit arretiertem Anzeiger in eine Aufnahmeöffnung einer Anzeigevorrichtung eingesteckt ist,
- Fig. 4a: eine schematische Querschnittsansicht einer weiteren Ausführungsform mit einem in diskreten Winkelpositionen positionierbaren Anzeiger in der Freigabeposition, und
- Fig. 4b: die Ausführungsform von Fig. 4a, bei der sich der stabförmige Anzeiger in der Arretierposition befindet.

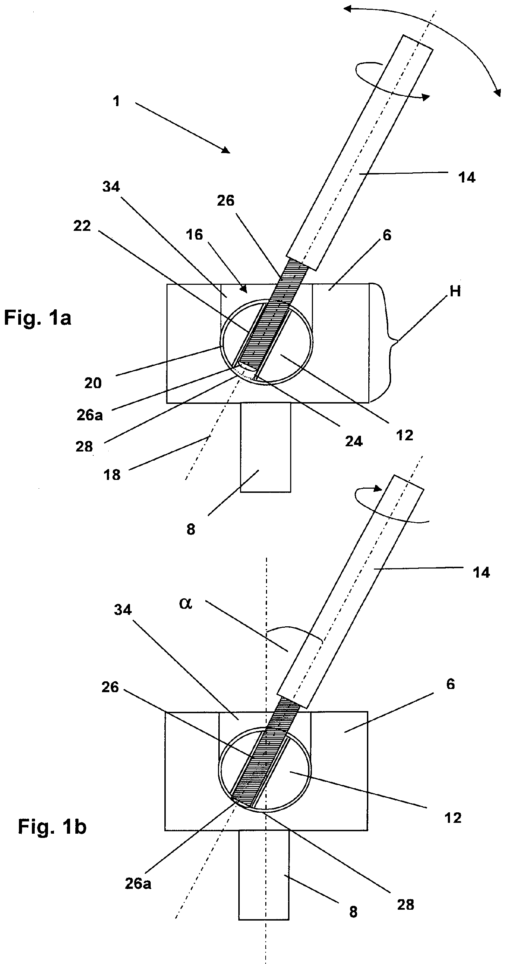

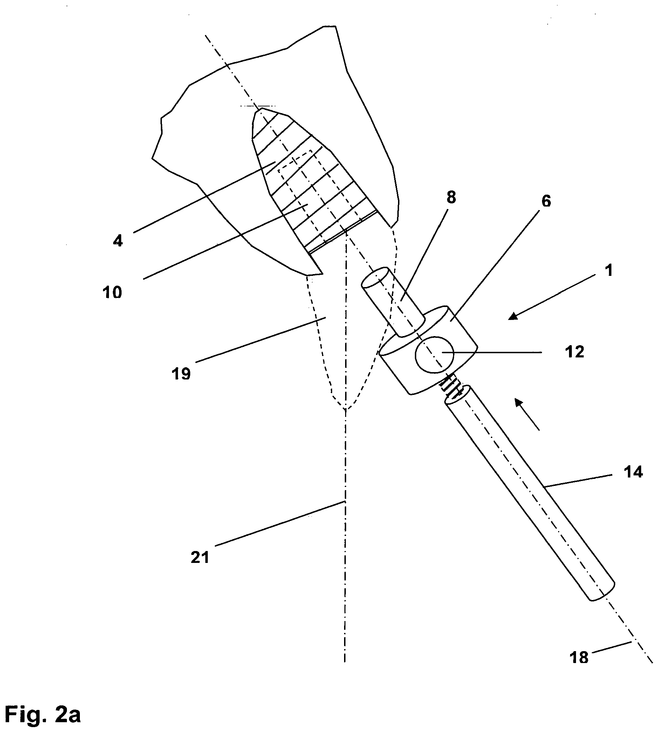

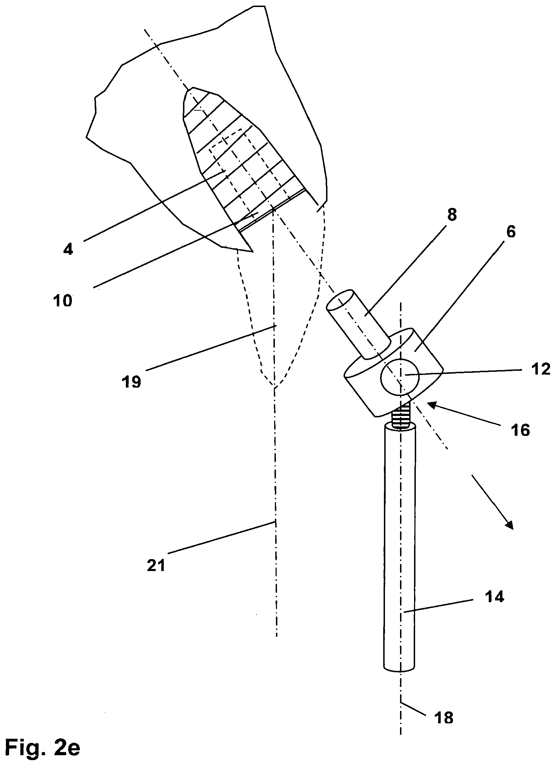

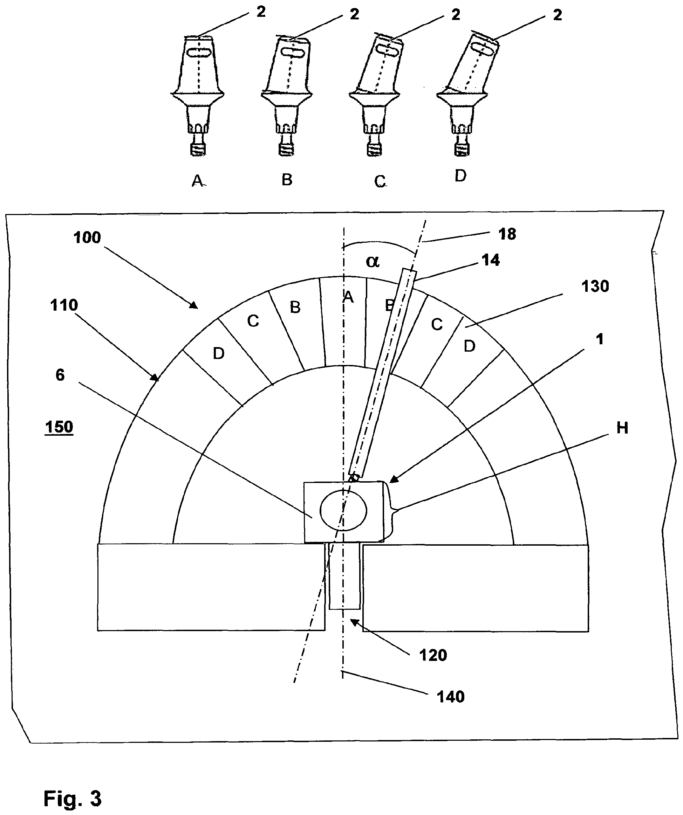

Wie in Fig. 1 gezeigt ist, umfasst eine erfindungsgemäße Vorrichtung 1 zur Bestimmung der Angulation eines in Fig. 3 beispielhaft gezeigten Abutments oder Aufbauteils 2 für ein Zahnimplantat 4 ein Gehäuse 6, an dessen Außenseite ein zapfenförmiger Vorsprung 8 geformt ist. Der zapfenförmige Vorsprung 8 besitzt einen solchen Durchmesser und eine solche Länge, dass dieser im Wesentlichen spielfrei in eine Innenbohrung 10 des in den Figuren 2a bis 2d beispielhaft gezeigten Zahnimplantats 4 einführbar ist, das zuvor in den Kieferknochen eines Patienten eingesetzt wurde.

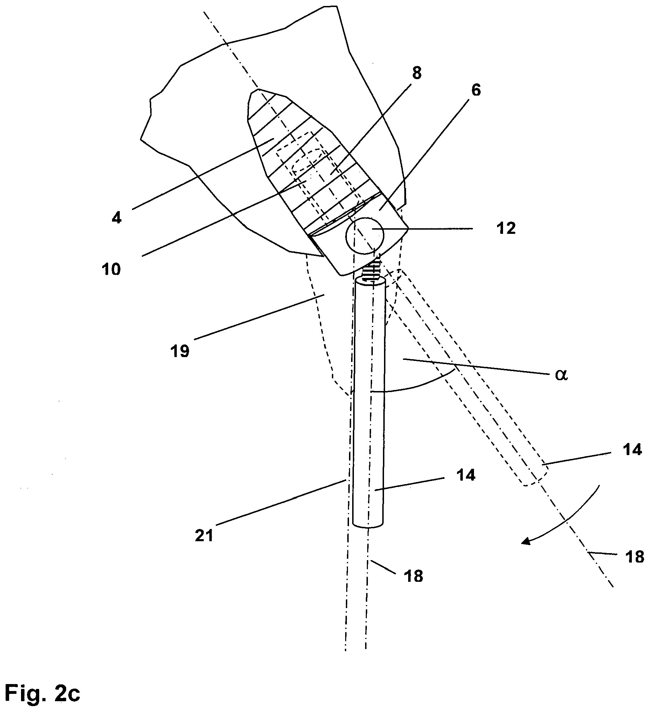

Wie der Darstellung der Fig. 1 und der Fig. 1b weiterhin im Detail entnommen werden kann, ist im Gehäuse 6 ein Drehkörper 12 rotierbar aufgenommen, an dem ein stabförmiger Anzeiger 14 angeordnet ist. Der Drehkörper 12, der vorzugsweise aus einer mit dem zapfenförmigen Vorsprung 8 fluchtenden Position, wie sie in Fig. 2a gezeigt ist, um einen Winkel α von beispielsweise bis zu 45 Grad in eine in Fig. 2c gezeigte abgewinkelte Stellung verschwenkt werden kann, ist durch eine zwischen dem Gehäuse 6 und dem Drehkörper 12 wirkende Arretiereinrichtung 16 in unterschiedlichen Drehwinkelstellungen drehfest mit dem Gehäuse 6 koppelbar.

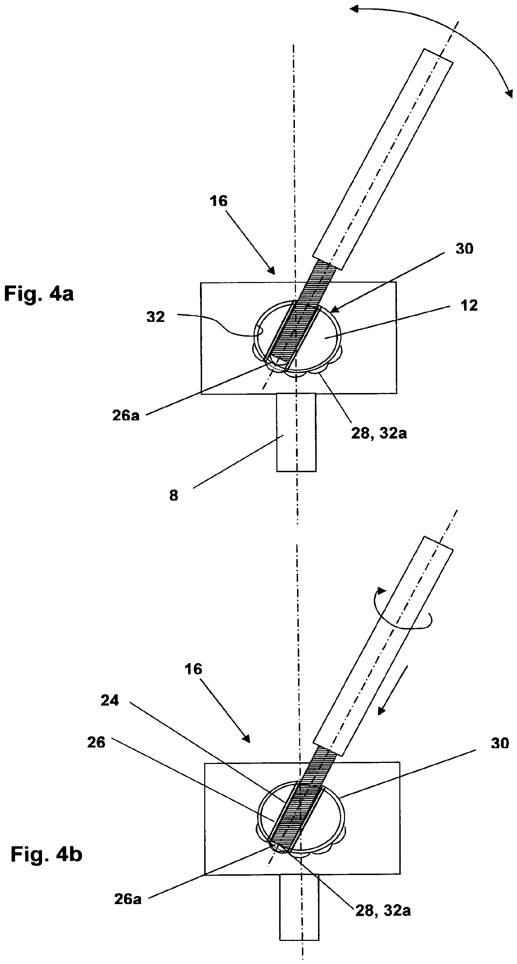

Bei der bevorzugten Ausführungsform der Erfindung ist der Drehkörper 12 als ein vorzugsweise zylindrischer Drehkörper ausgestaltet, der in einer sich orthogonal zur Längsachse 18 des stabförmigen Anzeigers 14 erstreckenden Öffnung 20 des Gehäuses 6 aufgenommen ist, wie dies in den Figuren 1a und 1b sowie auch den Figuren 4a und 4b angedeutet ist.

Um den Drehkörper 12, der in gleicher Weise wie das Gehäuse 6 und der Anzeiger 14 bevorzugt aus Metall, z.B. aus Edelstahl oder auch aus Kunststoff, gefertigt ist, einerseits frei innerhalb der Öffnung 20 rotieren und andererseits nach dem Erreichen einer gewünschten Drehwinkelstellung feinfühlig mit lediglich einer Hand in dieser Position arretieren zu können, umfasst die Arretiereinrichtung 16 eine im Drehkörper 12 geformte Durchgangsbohrung 22.

Diese Durchgangsbohrung 22 ist mit einem Innengewindeabschnitt 24 versehen, in den ein Außengewinde 26 des stabförmigen Anzeigers 14 eingeschraubt werden kann. Die Länge der Gewindeabschnitte 24 und 26 ist dabei so bemessen, dass die Stirnfläche 26a des Außengewindeabschnitts 26 beim Erreichen einer in den Figuren 1b und 4b gezeigten Einschraub-Arretierposition des Anzeigers 14 an einer im Gehäuse 6 angeordneten Klemmfläche 28 anliegt und den Drehkörper 12 gegenüber dem Gehäuse 6 verklemmt.

Durch diese Ausgestaltung der Erfindung ergibt sich der Vorteil, dass das Arretieren des Drehkörpers 12 gegenüber dem Gehäuse 6 durch Drehen des stabförmigen Anzeigers 14 manuell oder mit einem geeigneten Instrument sehr feinfühlig und in kurzer Zeit erfolgen kann. Hierdurch lässt sich die Belastung für den Patienten in vorteilhafter Weise ebenfalls gering gehalten.

Auf der anderen Seite wird durch die zuvor beschriebene Ausgestaltung der Arretiereinrichtung 16 der Vorteil erhalten, dass durch das Zusammenwirken der Gewindeabschnitte 24 und 26, die vorzugsweise Feingewindeabschnitte sind, mit geringem Kraftaufwand eine dennoch sehr hohe Klemmkraft erzeugt werden kann, die sicherstellt, dass sich der stabförmige Anzeiger 14 beim Herausziehen aus dem Zahnimplantat 4 und Einsetzen in eine nachfolgend noch näher zu beschreibende Anzeigeeinrichtung 110, wie sie in Fig. 3 gezeigt ist, nicht versehentlich verdreht.

Hierdurch wird in vorteilhafter Weise ein unbeabsichtigtes Verstellen des ermittelten Winkelwerts α verhindert, der andernfalls leicht zur Auswahl eines Abutments 2 führen kann, dessen Angulationswinkel den tatsächlichen Winkelverhältnissen zwischen der Längsachse des Zahnimplantats 4 und der durch die benachbarten Zähne und/oder Zahnimplantate 19 verlaufenden Längsachse 21 nicht am nächsten kommt. Das Gleiche gilt entsprechend für ein einzusetzendes anguliertes Abutment, welches als Basis für die Befestigung einer Prothese zur Wiederherstellung der Kaufunktion dient.

Gemäß einer weiteren Ausführungsform der Erfindung besitzt das Gehäuse 6 eine sich quer zur Drehachse des Drehkörpers 12 erstreckende längsschlitzartige Öffnung 34, wie dies in den Figuren 1a und 1b gezeigt ist. Durch diese Öffnung 34 hindurch erstreckt sich der am Drehkörper 12 befestigte stabförmige Anzeiger 14 aus dem Inneren des Gehäuses 6 heraus, wie dies in Fig. 1a und 1b angedeutet ist.

Durch diese Ausführungsform des Gehäuses 6 ergibt sich der Vorteil, dass der Außengewindeabschnitt 26 des Anzeigers 14 mit wenigen Handgriffen durch die längsschlitzartige Öffnung 34 im Gehäuse 6 hindurch in die Innengewindebohrung 24 im Drehkörper 12 eingeschraubt werden kann. Dadurch lässt sich die Vorrichtung 1 in kürzester Zeit aus lediglich 3 Bauteilen - dem Gehäuse 6, dem Drehkörper 12 und dem Anzeiger 14 - zu einer Einheit zusammen bauen, die sich als solche entsprechend einfach auch wieder demontieren lässt, um die Einzelteile zu reinigen bzw. zu sterilisieren.

Bei der bevorzugten Ausführungsform der Erfindung ist die Öffnung 20 für den Drehkörper 12 eine in den Figuren 1a und 1b gezeigte, in das Gehäuse 6 von der Seite her eingebrachte zylindrische Bohrung 30, die vorzugsweise als Sackbohrung ausgestaltet ist.

Bei dieser Ausführungsform der Erfindung bildet ein Teilbereich der zylindrischen Innenumfangsfläche 32 der Bohrung 30 die Klemmfläche 28, an der die Stirnfläche 26a des Außengewindeabschnitts 26 des stabförmigen Anzeigers 14 anliegt, wenn dieser bis in die Einschraub-Arretierposition eingeschraubt wurde, wie dies in Fig. 1a und 1b gezeigt ist.

Aufgrund der als zylindrische Innenumfangsfläche 32 ausgestalteten Innenumfangsfläche der zylindrischen Bohrung 30 ergibt sich hierbei der Vorteil, dass der Drehkörper 12 durch die Arretiereinrichtung 16 in beliebigen Winkelpositionen eines vorgegebenen Drehwinkelbereichs, beispielsweise 0 bis 45 Grad, positioniert werden kann.

Ein weiterer Vorteil, der sich durch diese Ausführungsform der Erfindung ergibt, ist darin zu sehen, dass sich durch die Positionierbarkeit und Arretierbarkeit des Drehkörpers 12 in einer beliebigen Drehwinkelposition die Möglichkeit eröffnet, individuelle Abutments 2 zu fertigen, deren Angulation exakt mit dem Winkel zwischen der Längsachse des Zahnimplantats 4 und der Längsachse 21 der benachbarten Zähne/Suprastrukturen 19 übereinstimmt.

Nach einem weiteren der Erfindung zugrunde liegenden Gedanken kann gemäß einer in den Fig. 4a und Fig. 4b gezeigte Ausführungsform der Erfindung der Drehkörper 12 durch die Arretiereinrichtung 16 ausschließlich in vorgegebenen diskreten Winkelpositionen positioniert werden.

Durch das Vorgeben von diskreten Winkelpositionen, die vorzugsweise den jeweiligen Angulationswinkeln der für ein jeweiliges Zahnimplantat 4 bereit gestellten Abutments 2 entsprechen, ergibt sich der Vorteil, dass dem Zahnarzt die Art des Abutments auf der Anzeigevorrichtung - wie in Fig. 3 gezeigt - automatisch konkret angezeigt wird.

Dies kann z.B. mit Hilfe von aufgedruckten Buchstaben oder sonstigen Symbolen oder Zahlen etc. erfolgen, was die Auswahl des idealen Abutments in der Praxis beachtlich erleichtert und die hierfür erforderliche Zeitdauer entsprechend verkürzt.

Um die vorgegebenen diskreten Winkelpositionen, in denen der Drehkörper 12 durch die Arretiereinrichtung 16 ausschließlich arretierbar ist, bereitzustellen, weist die Öffnung 20 für den Drehkörper 12 eine in das Gehäuse 6 eingebrachte Bohrung auf, deren Innenumfangsfläche 32, wie in Fig. 4a und Fig. 4b gezeigt, in dem zugehörigen Teilbereich, welcher die Klemmfläche 28 bildet, mit aneinander angrenzenden Vertiefungen 32a versehen ist.

In diese Vertiefungen 32a taucht das Ende des stabförmigen Anzeigers 14 ein. Die Stirnfläche 26a dieses Endes ist in diesem Falle als eine Fläche des Außengewindeabschnitts 26 ausgestaltet, die sich zu ihrem Zentrum hin nach Art einer Kegels oder einer Kugelfläche auf die Vertiefung 32a zu verjüngt.

Durch eine entsprechende Wahl der Steigung und Form der Steigung der aneinander angrenzenden Vertiefungen 32a und des Winkels, bzw. Radius der Stirnfläche 26a kann hierbei in vorteilhafter Weise erreicht werden, dass sich die Stirnfläche 26a stets exakt auf das Zentrum einer Vertiefung 32a ausrichtet und hierdurch die Drehwinkelposition des Drehkörpers 12 zwangsweise verdreht, wenn der stabförmige Anzeiger 14 zunehmend weiter in die Einschrauben-Arretierposition eingeschraubt wird.

Nach einem weiteren der Erfindung zugrunde liegenden Gedanken ist der zapfenförmige Vorsprung 8 lösbar mit dem Gehäuse 6 verbunden und in der Weise ausgestaltet, dass zapfenförmige Vorsprünge 8 mit unterschiedlichen Querschnittsgeometrien und/oder Außengeometrien und/oder Durchmessern und/oder Längen am Gehäuse 6 befestigt werden können.

Hierdurch ergibt sich der Vorteil, dass sich die erfindungsgemäße Vorrichtung 1 auch in Zahnimplantate unterschiedlicher Hersteller einsetzen lassen, indem der zapfenförmige Vorsprung der Form und dem Durchmesser der Innenbohrung des betreffenden Implantats angepasst ist.

Hierzu kann es z.B. vorgesehen sein, dass der zapfenförmige Vorsprung einen am Gehäuse befestigten Stift mit einem geringen Durchmesser besitzt, auf den eine Hülse mit einer dem Durchmesser des Stifts entsprechenden Innenbohrung aufgeschoben wird, deren Außendurchmesser der Form der Innenbohrung des Implantats 1 entspricht. Der Stift und die Hülse können dabei eine polygonale oder auch ovale Querschnittsform besitzen, um die Hülse gegenüber dem Gehäuse gegen ein Verdrehen zu sichern.

In den vorhergehenden Ausführungen ist als Innenbohrung 10 auch eine in den Implantatkörper eingebrachte Öffnung zu verstehen, die z.B. nachträglich eingefräst ist und ein oder mehrere bekannte Indexierungselemente aufweist, mit denen sich das Abutment in einer vorgegebenen Ausrichtung einsetzen lässt.

In gleicher Weise kann die Öffnung im Implantatkörper 4 z.B. einen Innenmehrkant, insbesondere einen Innensechskant oder eine andere geometrische Verzahnung aufweisen, welche zur Insertion eines Schraubenimplantates und/oder einer späteren definierten Ausrichtung und/oder Rotationssicherung eines Abutments vorgesehen sein kann.

Die Verfahrensschritte beim Einsatz der erfindungsgemäßen Vorrichtung 1 werden nachfolgend anhand der Figuren 2a bis 2e beschrieben.

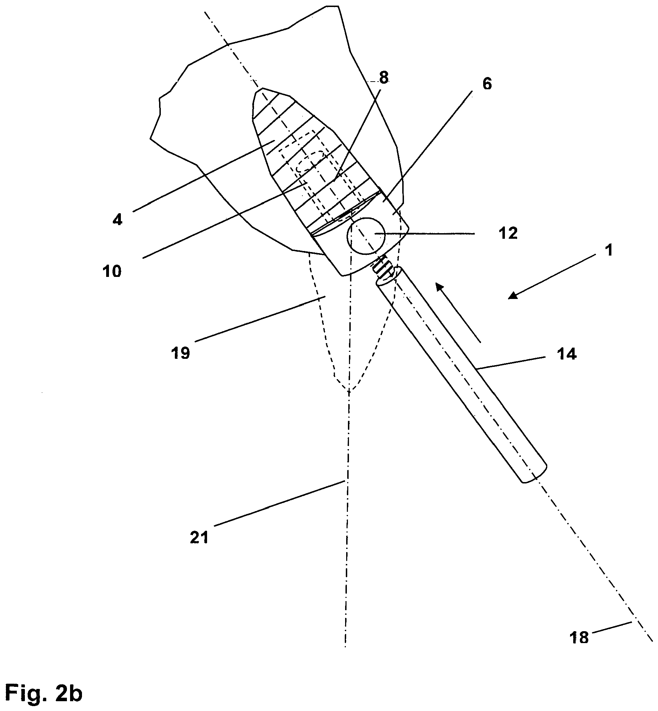

Wie in Fig. 2a und 2b gezeigt ist, wird die Vorrichtung 1 mit fluchtend zur Innenbohrung 10 ausgerichtetem stabförmigen Anzeiger 14 mit dem zapfenförmigen Vorsprung 8 voraus in die Innenbohrung 10 eines zuvor implantierten Zahnimplantats 4 eingeführt, wobei sich der Anzeiger 14 in der Freigabeposition oder auch in der Arretierposition befinden kann.

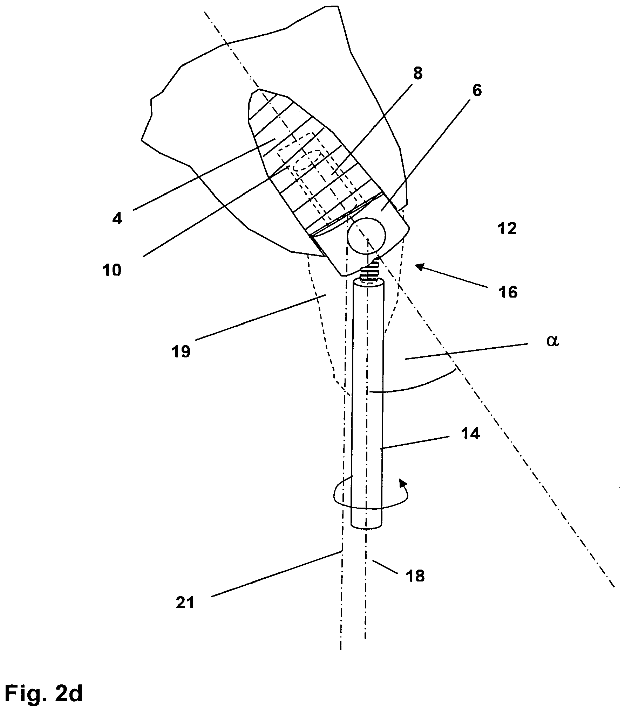

Im Anschluss daran wird der stabförmige Anzeiger 14 um einen Schwenkwinkel α bei entriegelter Arretiereinrichtung 16 solange verschwenkt, bis die Längsachse 18 des Anzeigers 14 - wie in Fig. 2c gezeigt - parallel zur Längsachse 21 eines angrenzenden Zahns oder einer Suprastruktur 19 und/oder einer anzustrebenden Ausrichtung einer Prothese zur Wiederherstellung der Kaufunktion ausgerichtet ist. In dieser Stellung wird die Arretiereinrichtung 16 dann durch Rotieren des stabförmigen Anzeigers 14 im Uhrzeigersinn gesperrt oder verriegelt, wie dies in Fig. 2d durch den nicht näher bezeichneten Pfeil angedeutet ist.

Hierdurch wird das Gehäuse 6 drehfest mit dem Drehkörper 12 gekoppelt, an welchem wiederum der stabförmige Anzeiger 14 befestigt ist, der dementsprechend in der gewählten Drehwinkelposition relativ zum Gehäuse 6 fixiert wird.

Als nächstes wird die erfindungsgemäße Vorrichtung 1 wieder aus dem Zahnimplantat 4 entnommen und mit dem zapfenförmigen Vorsprung 8 voraus in eine Aufnahmeöffnung 120 einer in Fig. 3 gezeigten Anzeigevorrichtung 110 eingesteckt. Die Anzeigevorrichtung 110 besitzt eine seitlich der Aufnahmeöffnung 120 angeordnete Anzeigeskala 130, die sich in einer parallel zur Längsachse 140 der Aufnahmebohrung 120 verlaufenden Ebene 150 erstreckt. Auf der Anzeigeskala 130 sind Symbole oder-Zahlen angeordnet, die in Fig. 3 beispielhaft als Buchstaben A, B, C, D ausgeführt sind. Die Buchstaben sind in jeweiligen Sektoren angeordnet, welche den Winkelbereich um den Angulationswinkel eines zugehörigen Abutments einer Vielzahl von Abutments herum überspannen, welche in der Darstellung der Fig. 3 symbolisch oberhalb der Anzeigeskala 130 angeordnet sind und mit demselben Buchstaben A, B, C oder D bezeichnet wurden.

Durch diese Ausgestaltung der Erfindung wird es dem Zahnarzt ermöglicht, anhand des zwischen dem stabförmigen Anzeiger 14 und dem zapfenförmigen Vorsprung 8 eingestellten Winkels α das zugehörige Abutment, in diesem Falle das Abutment mit der Bezeichnung B, aus der Vielzahl der vorgegebenen Abutments A, B, C, D auszuwählen, ohne z.B. den Winkel mit einer Messeinrichtung zuvor messen und das zugehörige Abutment mit einem am nächsten kommenden Angulationswinkel in aufwendiger Weise von Hand ermitteln zu müssen.

Durch die in der zuvor beschriebenen Weise gebildete Anordnung 100 zur Auswahl eines gewinkelten Abutments 2 für ein implantiertes Zahnimplantat 4 aus einer Vielzahl von vorgegebenen Abutments mit unterschiedlichen Angulationswinkeln, welche zum einen die Vorrichtung 1 und zum anderen die Anzeigevorrichtung 110 umfasst, lassen sich Fehler bei der Auswahl eines Abutments mit der am besten geeignetsten Angulation in vorteilhafter Weise weitestgehend vermeiden und der benötigte Zeitaufwand wie auch die Belastung für den Patienten für die Auswahl des am besten geeignetsten Abutments 2 auf ein Minimum reduzieren.

Um hierbei bei den auszuwählenden Abutments 2 gleichzeitig auch unterschiedliche Höhen und Formen der das eingesetzte Implantat 2 umgebenden Gingiva berücksichtigen zu können, kann es weiterhin vorgesehen sein, zwei oder mehr Gruppen von erfindungsgemäßen Vorrichtungen 1 vorzusehen, bei denen das Gehäuse 6 einer jeden Gruppe eine jeweils der Gingiva-Form des Abutments 2 entsprechende einheitliche äußere Grundform aufweist und sich die Gehäuse 6 einer jeden Gruppe lediglich in ihren Höhen H unterscheiden. So können für jede Gehäuseform/Gingiva-Form beispielsweise vier Gehäusehöhen H vorgesehen sein, die zu entsprechenden Abutments 2 mit einer Gingiva-Höhe von z.B. 0,5 mm, 0,75 mm, 1,5 mm und 2 mm korrespondieren.

Nach einem weiteren der Erfindung zugrundeliegenden Gedanken kann der auf der Anzeigeskala 130 abgelesene oder in sonstiger Weise bestimmte Angulationswinkel dazu herangezogen werden, ein patientenindividuelles, z.B. mittels CAD/CAM Technik gefertigtes Abutment 2 herzustellen.

### Bezugszeichen

- 1: erfindungsgemäße Vorrichtung
- 2: Abutment
- 4: Zahnimplantat
- 6: Gehäuse
- 8: zapfenförmiger Vorsprung
- 10: Innenbohrung des Zahnimplantats
- 12: Drehkörper
- 14: stabförmiger Anzeiger
- 16: Arretiereinrichtung
- 18: Längsachse des stabförmigen Anzeigers
- 19: Zahn/Suprastruktur eines benachbarten Implantats
- 20: Öffnung im Gehäuse für Drehkörper
- 21: Längsachse durch benachbarten Zahn oder Suprastruktur eines benachbarten Implantatszahnes
- 22: Durchgangsbohrung
- 24: Innengewindeabschnitt
- 26: Außengewindeabschnitt am stabförmigen Anzeiger
- 26a: Stirnfläche des Außengewindeabschnitts
- 28: Klemmfläche im Gehäuse
- 30: zylindrische Bohrung
- 32: zylindrische Innenumfangsfläche der Bohrung
- 32a: Vertiefungen
- 34: längsschlitzartige Öffnung
- 100: Anordnung zur Auswahl eines gewinkelten Abutments
- 110: Anzeigevorrichtung
- 120: Aufnahmeöffnung
- 130: Anzeigeskala
- 140: Längsachse der Aufnahmebohrung
- 150: Ebene parallel zur Längsachse zur Aufnahmebohrung
- α: Schwenkwinkel
- H: Gehäusehöhe

## Patentansprüche

1. Anordnung (100) zur Auswahl eines gewinkelten Abutments (2) für ein implantiertes Zahnimplantat (4) aus einer Vielzahl von vorgegebenen Abutments (2) mit unterschiedlichen Angulationswinkeln, umfassend eine Vorrichtung (1) zur Bestimmung der Angulation eines Abutments (2) für ein Zahnimplantat (4), umfassend ein Gehäuse (6), einen an der Außenseite des Gehäuses (6) befestigten zapfenförmigen Vorsprung (8), der in eine Innenbohrung (10) des Zahnimplantats (4) einführbar ist, einen im Gehäuse (6) relativ zum zapfenförmigen Vorsprung (8) rotierbaren Drehkörper (12), sowie einen mit dem Drehkörper (12) verbundenen stabförmigen Anzeiger (14), wobei der Drehkörper (12) durch eine zwischen dem Drehkörper (12) und dem Gehäuse (6) wirkende Arretiereinrichtung (16) in unterschiedlichen Drehwinkelstellungen drehfest mit dem Gehäuse (6) koppelbar ist, **dadurch gekennzeichnet, dass** die Anordnung eine Anzeigevorrichtung (110) umfasst, welche eine Aufnahmeöffnung (120) zur Aufnahme des zapfenförmigen Vorsprungs (8) sowie eine seitlich der Aufnahmeöffnung angeordnete Anzeigeskala (130) umfasst, die sich in einer parallel zur Längsachse (140) der Aufnahmebohrung (120) verlaufenden Ebene (150) erstreckt und auf der der Winkel zwischen der Längsachse (140) der Aufnahmebohrung (120) und dem stabförmigen Anzeiger (14) und/oder die Bezeichnung eines zu diesem Winkel korrespondierenden Abutments (2) aus der Vielzahl von vorgegebenen Abutments (2) ablesbar ist.

2. Anordnung nach Anspruch 1,
**dadurch gekennzeichnet, dass**
der Drehkörper (12) rotierbar in einer sich orthogonal zur Längsachse (18) des stabförmigen Anzeigers (14) erstreckenden Öffnung (20) des Gehäuses (6) aufgenommen ist.

3. Anordnung nach Anspruch 1 oder 2,
**dadurch gekennzeichnet, dass**
die Arretiereinrichtung (16) eine im Drehkörper (12) geformte Durchgangsbohrung (22) mit einem Innengewindeabschnitt (24) aufweist, in die ein Außengewindeabschnitt (26) des stabförmigen Anzeigers (14) einschraubbar ist, derart, dass die Stirnfläche (26a) des Außengewindeabschnitts (26) beim Erreichen einer Einschraub-Arretierposition des Anzeigers (14) an einer im Gehäuse (6) angeordneten Klemmfläche (28) anliegt und den Drehkörper (12) gegenüber dem Gehäuse (6) verklemmt.

4. Anordnung nach einem der vorhergehenden Ansprüche,
**dadurch gekennzeichnet, dass**
die Arretiereinrichtung (16) in beliebigen Winkelpositionen eines vorgegebenen Drehwinkelbereichs arretierbar ist.

5. Anordnung nach einem der vorhergehenden Ansprüche,
**dadurch gekennzeichnet, dass**
die Öffnung (20) für den Drehkörper (12) eine in das Gehäuse (6) eingebrachte zylindrische Bohrung (30), insbesondere eine Sackbohrung ist, und dass eine Klemmfläche (28) ein Teilbereich der zylindrischen Innenumfangsfläche (32) der Bohrung (30) ist.

6. Anordnung nach einem der vorhergehenden Ansprüche,
**dadurch gekennzeichnet, dass**
der Drehkörper (12) durch die Arretiereinrichtung (16) ausschließlich in vorgegebenen diskreten Winkelpositionen arretierbar ist.

7. Anordnung nach Anspruch 6,
**dadurch gekennzeichnet, dass**
die Öffnung (20) für den Drehkörper (12) eine in das Gehäuse (6) eingebrachte zylindrische Bohrung (30) ist, und dass ein Teilbereich der Innenumfangsfläche (32) der Bohrung (30), welcher eine Klemmfläche (28) bildet, mit aneinander angrenzenden Vertiefungen (32a) versehen ist, in die das Ende des stabförmigen Anzeigers (14) an den vorgegebenen diskreten Winkelpositionen eintaucht, wenn sich der Außengewindeabschnitt (26) des Anzeigers (14) in der Einschraub-Arretierposition befindet.

8. Anordnung nach einem der vorhergehenden Ansprüche,
**dadurch gekennzeichnet, dass**
der zapfenförmige Vorsprung (8) lösbar mit dem Gehäuse (6) verbunden ist, und dass zapfenförmige Vorsprünge mit unterschiedlichen Querschnittsgeometrien und/oder Außengeometrien und/oder Durchmessern und/oder Längen am Gehäuse (6) befestigbar sind.

9. Anordnung nach einem der vorhergehenden Ansprüche,
**dadurch gekennzeichnet, dass**
das Gehäuse (6) eine sich quer zur Drehachse des Drehkörpers (12) erstreckende längsschlitzartige Öffnung (34) besitzt, durch die hindurch sich der am Drehkörper (12) befestigte stabförmige Anzeiger (14) aus dem Inneren des Gehäuses (6) heraus erstreckt.

10. Anordnung nach einem der vorhergehenden Ansprüche,
**dadurch gekennzeichnet, dass**
zwei oder mehr Gruppen von erfindungsgemäßen Vorrichtungen (1) vorgesehen sind, bei denen das Gehäuse (6) einer jeden Gruppe eine jeweils der Gingiva-Form des Abutments (2) entsprechende einheitliche äußere Grundform aufweist und sich die Gehäuse (6) einer jeden Gruppe lediglich in ihren Höhen (H) unterscheiden.

## Claims

1. An assembly (100) for selecting an angled abutment (2) for an implanted dental implant (4) from a plurality of prespecified abutments (2) having different angulation angles, comprising a device (1) for determining the angulation of an abutment (2) for a dental implant (4), comprising a housing (6), a conical projection (8) fastened to the outside of the housing (6) which can be inserted into an internal hole (10) of the dental implant (4), a rotary body (12) which can be rotated in the housing (6) relative to the conical projection (8), as well as a rod-shaped indicator (14) connected to the rotary body (12), wherein the rotary body (12) can be coupled to the housing (6) in a rotationally fixed manner in different rotational angle positions by means of a locking device (16) acting between the rotary body (12) and the housing (6), **characterized in that** the assembly comprises an indicator device (110) which comprises a receiving opening (120) in order to accommodate the conical projection (8), as well as a display scale (130) disposed laterally of the receiving opening and extending in a plane (150) disposed parallel to the longitudinal axis (140) of the receiving opening (120) and on which the angle between the longitudinal axis (140) of the receiving opening (120) and the rod-shaped indicator (14) and/or the designation of an abutment (2) corresponding to this angle from a plurality of prespecified abutments (2) can be read.

2. The assembly as claimed in claim 1, **characterized in that** the rotary body (12) is rotationally accommodated in an opening (20) of the housing (6) extending orthogonally to the longitudinal axis (18) of the rod-shaped indicator (14).

3. The assembly as claimed in claim 1 or claim 2, **characterized in that** the locking device (16) comprises a through hole (22) formed in the rotary body (12) and having an internally threaded section (24), into which an externally threaded section (26) of the rod-shaped indicator (14) can be screwed in a manner such that upon reaching a screwed-in locking position of the indicator (14), the end face (26a) of the externally threaded section (26) abuts at a clamping surface (28) disposed in the housing (6) and clamps the rotary body (12) with respect to the housing (6).

4. The assembly as claimed in one of the preceding claims, **characterized in that** the locking device (16) can be locked in any angular position of a prespecified range of rotational angles.

5. The assembly as claimed in one of the preceding claims, **characterized in that** the opening (20) for the rotary body (12) is a cylindrical hole (30) introduced into the housing (6), in particular a blind hole, and **in that** a clamping surface (28) is a subregion of the cylindrical inner circumferential surface (32) of the hole (30).

6. The assembly as claimed in one of the preceding claims, **characterized in that** the rotary body (12) can be locked by the locking device (16) exclusively in prespecified discrete angular positions.

7. The assembly as claimed in claim 6, **characterized in that** the opening (20) for the rotary body (12) is a cylindrical hole (30) introduced into the housing (6), and **in that** a subregion of the inner circumferential surface (32) of the hole (30) which forms a clamping surface (28) is provided with recesses (32a) which are adjacent to one another, into which the end of the rod-shaped indicator (14) extends at the prespecified discrete angular positions when the externally threaded section (26) of the indicator (14) is in the screwed-in locking position.

8. The assembly as claimed in one of the preceding claims, **characterized in that** the conical projection (8) is releasably connected to the housing (6), and **in that** conical projections with different cross sectional geometries and/or external geometries and/or diameters and/or lengths can be fastened to the housing (6).

9. The assembly as claimed in one of the preceding claims, **characterized in that** the housing (6) has a longitudinal slit-like opening (34) extending transversely to the rotary axis of the rotary body (12), through which the rod-shaped indicator (14) which is fastened to the rotary body (12) extends outwardly from the interior of the housing (6).

10. An assembly as claimed in one of the preceding claims, **characterized in that** two or more groups of devices (1) in accordance with the invention are provided, in which the housing (6) of each respective group has a uniform outer basic form corresponding to the respective gingival shape of the abutment (2) and the housings (6) of each respective group differ only in their heights (H).

## Revendications

1. Dispositif (100) de sélection d'une butée coudée (2) pour un implant dentaire implanté (4) parmi une multitude de butées prédéterminées (2) ayant des angles d'angulation différents, comprenant un dispositif (1) de définition de l'angulation d'une butée (2) pour un implant dentaire (4), comprenant un boîtier (6), une saillie en forme de tourillon (8) fixée à la face extérieure du boîtier (6) et qui peut être introduite dans un alésage interne (10) de l'implant dentaire (4), un corps rotatif (12) pouvant tourner dans le boîtier (6) par rapport à la saillie en forme de tourillon (8), de même qu'un indicateur en forme de barre (14) raccordé au corps rotatif (12), le corps rotatif (12) pouvant être couplé de manière fixe en rotation au boîtier (6) par un dispositif de blocage (16) agissant entre le corps rotatif (12) et le boîtier (6) dans différentes positions d'angle de rotation, **caractérisé en ce que** le dispositif comprend un dispositif d'affichage (110) qui comporte un orifice récepteur (120) destiné à recevoir la saillie en forme de tourillon (8) et une échelle d'affichage (130) disposée à côté de l'orifice récepteur et qui s'étend dans un plan (150) orienté parallèlement à l'axe longitudinal (140) de l'orifice récepteur (120) et sur laquelle l'angle entre l'axe longitudinal (140) de l'orifice récepteur (120) et l'indicateur en forme de barre (14) et/ou la désignation d'une butée (2) correspondant à cet angle parmi la multitude de butées prédéfinies (2) peut être lu.

2. Dispositif selon la revendication 1, **caractérisé en ce que** le corps rotatif (12) est reçu de manière à pouvoir tourner dans un orifice (20) s'étendant orthogonalement par rapport à l'axe longitudinal (18) de l'indicateur en forme de barre (14) du boîtier (6)

3. Dispositif selon la revendication 1 ou 2, **caractérisé en ce que** le dispositif de blocage (16) présente un alésage traversant (22) doté d'une section interne (24) pratiquée dans le corps rotatif (12) et dans lequel une section filetée externe (26) de l'indicateur en forme de barre (14) peut être vissée de manière à ce que la surface avant (26a) de la section filetée externe (26), à l'atteinte d'une position de blocage de vissage de l'indicateur (14), repose au niveau d'une surface de serrage (28) disposée dans le boîtier (6) et serre le corps rotatif (12) par rapport au boîtier (6).

4. Dispositif selon une des revendications précédentes, **caractérisé en ce que** le dispositif de blocage (16) peut être bloqué dans n'importe quelles positions angulaires d'une plage d'angle de rotation prédéfinie.

5. Dispositif selon une des revendications précédentes, **caractérisé en ce que** l'orifice (20) pour le corps rotatif (12) est un alésage cylindrique (30) pratiqué dans le boîtier (6), en particulier un trou borgne, et qu'une surface de serrage (28) est une sous-partie de la surface circonférentielle intérieure (32) de l'alésage (30).

6. Dispositif selon une des revendications précédentes, **caractérisé en ce que** le corps rotatif (12) peut être bloqué par le dispositif de blocage (16) exclusivement dans des positions angulaires discrètes prédéfinies.

7. Dispositif selon la revendication 6, **caractérisé en ce que** l'orifice (20) pour le corps rotatif (12) est un alésage cylindrique (30) pratiqué dans le boîtier (6), et qu'une sous-partie de la surface circonférentielle intérieure (32) de l'alésage (30), laquelle sous-partie constitue une surface de serrage (28), est pourvue de creux (32a) contigus dans lesquels l'extrémité de l'indicateur en forme de barre (14) plonge au niveau des positions angulaires discrètes prédéfinies lorsque la section filetée externe (26) de l'indicateur (14) se trouve dans la position de blocage de vissage.

8. Dispositif selon une des revendications précédentes, **caractérisé en ce que** la saillie en forme de tourillon (8) est raccordée de manière dissociable au boîtier (6), et que des saillies en forme de tourillons à géométries de section transversale et/ou à géométries extérieures et/ou à diamètres et/ou à longueurs différents peuvent être fixées au boîtier (6).

9. Dispositif selon une des revendications précédentes, **caractérisé en ce que** le boîtier (6) possède un orifice (34) en forme de fente longitudinale s'étendant transversalement à l'axe de rotation du corps rotatif (12) et à travers lequel l'indicateur en forme de barre (14) fixé au corps rotatif (12) s'étend depuis l'intérieur du boîtier (6).

10. Dispositif selon une des revendications précédentes, **caractérisé en ce qu'**il est prévu deux dispositifs (1) selon l'invention ou plus dans lequel le boîtier (6) de chaque groupe présente une forme de base extérieure uniforme correspondant respectivement à la forme gingivale de la butée (2) et que les boîtiers (6) de chacun des groupes se distinguent simplement par leur hauteur (H).
